# EUROPEAN PATENT APPLICATION

(11) **EP 1 503 279 A1**
(43) Date of publication of application: **02.02.2005**
(21) Application number: 04077183.4
(22) Date of filing: 29.07.2004
(51) Int. Cl.: G06F 3/12

(54) **Method and apparatus for viewing on a client data representing a document to be printed**

(30) Priority: 01.08.2003 EP 03291948
(71) Applicant: Océ-Technologies B.V., 5914 CC Venlo (NL)
(72) Inventor: Delaplace, Etienne Xavier Charlemagne, 94700 Maisons Alfort (FR); Noureddine, Nadim, 94300 Vincennes (FR); Roque, Olivier Henri Marcel, 31270 Frouzins (FR); Appercel, Stéphane Pierre Raymond, 91300 Massay (FR); Meyer, Pierre Marc, 75015, Paris (FR)
(74) Representative: Rongen, Josephus Wilhelmus

(57) **Abstract**

A method for viewing on a client document data representing at least a part of a document to be printed, comprising the steps of transferring the document to be printed from the client to a print server, converting at the print server the document to be printed into document data and transferring said document data from the print server to the client. Said document data are at least part of a raster image file obtained by a raster conversion function, said raster conversion function being used to print the document. In an apparatus comprising a print server with a controller for converting the document to be printed into document data and a client computer connected through a network, the controller comprises a raster conversion function generating for said document data a raster image file to be sent to the client, said raster conversion function being used to print the document.

## Description

The invention relates to a method for viewing on a client document data representing at least a part of a document to be printed, comprising the steps of:
- transferring the document to be printed from the client to a print server
- converting at the server the document to be printed into document data
- transferring said document data from the print server to the client.

The invention also concerns an apparatus comprising a print server for sending print jobs to at least one print engine and at least one client computer connected through a network to the print server, wherein the client is suited for transferring a document to be printed to the print server, which print server comprises a controller for converting the document to be printed into document data and which server is suited for transferring said document data to the client.

The invention also concerns a computer program product residing on a computer readable medium comprising instructions for causing at least one process unit to perform the method according to the invention.

Most networks include a print server to which a print engine may be attached and a number of client computers sharing the resources of the print server so that the printer may be used by many users of the network. Documents to be printed may be sent from a client computer using a job submitter that transmits a print job from the client to the print server.

Documents to be printed usually contain text and graphics. Text describes letters and other symbols on a page, while graphics are for example a line, an illustration or a picture. Graphics may be transmitted to a print server as either an array of dots (bitmap graphics, also called raster graphics), or as a collection of lines (vector graphics). When an outline font is used, a letter is stored as a set of equations defining the lines which make the boundary of said letter.

The print server is provided with a controller having functions for the interpretation and rasterisation. The interpretation function of the controller examines the data sent from the client computer and identifies the command embedded in the data, such as printer control, page format, font management, text layout and graphics. Rasterising is the final stage in the process of preparing an image for printing, and converts the received commands into an array of dots to be used by the print engine. The print server is provided with a raster image processor (RIP) for performing the translation of a file containing vector format objects into a raster image file (also called bitmap file) to be sent to the print engine. Thus, the RIP produces the bitmap for each character of text, and places it at the specified position in the array and then overlays the array with any bitmap graphics, to form the pattern to be printed. Once the bitmap image file is ready, it is passed to the print engine.

A known method for viewing on a client computer document data representing a document to be printed uses dedicated application software of the client. However this method requires proprietary client software and it has a number of drawbacks like complexity and the fact that the view obtained on the client is deviating from the printed document. In particular, graphics and outline fonts are not rendered properly. Moreover the application software of the client has to be aware of all characteristics of all print engines accessible through the network. This involves very complex software that should be available on all client computers.

A method for viewing on a client computer document data representing a document to be printed is known from EP 1 132 808 A1. This publication describes how a print job is transmitted electronically to a reproduction centre where it is converted into a format suitable for showing the final appearance of the printed document, which print job can be retransmitted in this format to the client for viewing purposes. The document obtained in this format, for example a PDF (Portable Document Format) is stored in a temporary document store of the reproduction centre and then to a permanent document store of the reproduction centre and is then transmitted to the printer. This method has the problem that the document converted for viewing purposes is print device independent and that only an approximate final appearance can be obtained. Effects due to the print engine parameters (printer margins, paper size, positioning of image with respect to the paper etc.) can not be rendered properly. Moreover, outline fonts are not rendered accurately.

The present invention seeks to provide a method in which these problems are mitigated. It is accordingly an object of the present invention to provide an improved method for viewing on a client document data representing at least a part of a document to be printed in which a true final appearance of the print document can be viewed on the client computer.

According to the invention, this object is achieved by a method for viewing on a client document data representing at least a part of a document to be printed in which said document data are at least part of a raster image file obtained by a raster conversion function, said raster conversion function being used to print the document. Since the raster conversion function of the print server is the same as used to generate a raster image file for the selected print engine, the generated document data ensures to obtain a preview on the client showing a true final appearance of the document. This applies especially to graphics and to outline fonts. Additionally, the application of the client computer is less complex than in the case that it has to interpret a PDF file, which makes it easy to develop for a large variety of environments.

A preferred embodiment of the method according to the invention is characterised in that the raster conversion function at the print server performs the step of dividing the raster image file into areas. Thus even more efficient viewing processing at the client of the bitmap image generated by the print server is achieved.

Preferably, the step of converting the document to be printed into document data is followed by the step of compressing the raster image file obtained by the raster conversion function. Thus it is possible to obtain a more efficient and rapid transfer of the document data from the print server to the client.

In a preferred embodiment of the method according to the invention, the flow of data is streamed during the steps of transferring the document to be printed from the client to a print server, converting at the server the document to be printed into document data and transferring said document data to the client. Thus this ensures optimal performance and the time needed for viewing the image on the client can be reduced.

According to an aspect of the invention, the client is provided with a client data buffer and the print server is provided with a server data buffer, whereby the size of the client data buffer and the size of the client data buffer are dynamically adjusted. Thus the waiting time for the client can be reduced.

In an embodiment of the method according to the invention, the raster conversion function at the server generates a raster image file having a size optimised for the step of transferring the document data to the client. Thus the volume of data to be transferred can be limited which ensures a gain of time when viewing the document at the client.

Preferably, the raster conversion function at the server generates on demand by the client a second raster image file having a size optimised for zooming purposes at the client. Thus the client can request a second raster image file at a higher resolution, for the whole document to be printed or only for the area that is to be zoomed.

According to an aspect of the invention, the document data is stored in a memory unit of the printer server. Thus, raster image files obtained by the raster conversion function of the print server can be kept for some time in a memory, which avoids the step of converting again a document to be printed into document data when the same document is to be viewed.

In an embodiment of the method according to the invention, the document to be printed is stored in a memory unit of the printer server. This avoids having to send a document to be printed several times to the printer server, for example first for viewing purposes on the client, and then for printing.

The apparatus according to the invention is characterised in that the controller comprises a raster conversion function generating for said document data a raster image file, said raster conversion function being used to print the document on the at least print engine.

The invention will now be explained with reference to the following exemplified embodiments of the present invention, and illustrated by reference to the drawings. The embodiments serve to illustrate the invention and should not be regarded as a limitation thereof.
Fig. 1 is a schematic diagram of a print server connected to clients in a network environment, for use in connection with the invention.
Fig. 2 is a schematic diagram of a print server for sending print jobs to a print engine for use in connection with the invention.
Fig. 3 is a simplified component diagram comprising an embodiment of an apparatus according to the invention.
Fig. 4 is a flow diagram showing an embodiment of the method according to the invention.
Fig. 5 is a flow diagram showing an embodiment of the transfer process.

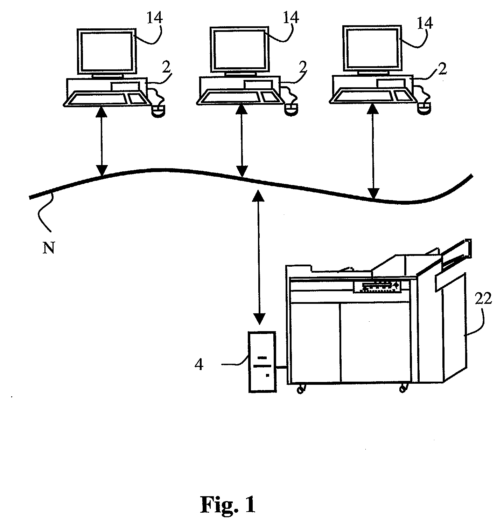

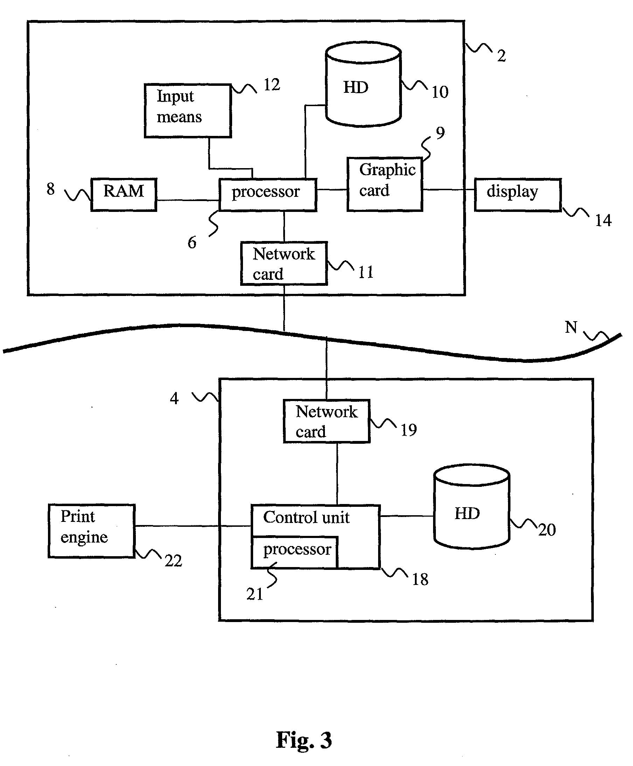

Fig. 1 shows a system of client computers 2, at least one print engine 22, and a print server 4 connected by a local network N. The apparatus according to the invention comprises a print server 4 for sending print jobs to a print engine 22 and at least one client computer 2 connected through a network N to the print server 4. The client computers are for example workstations, each having at least one processor 6 (shown in Fig. 3), a random access memory 8, a hard disk 10, a graphic card 9 and a network card 11. A display unit 14, like a monitor is connected to the client computer 2 for displaying purposes. The client computer 2 also comprises input means 12, for example a keyboard and a mouse or other indicator instruments. Users having a document to be printed from their workstation 2 connected to a local network N can choose for that purpose from a number of print engines 22. Obviously, all or a part of the print server components could be placed in the print engine 22.

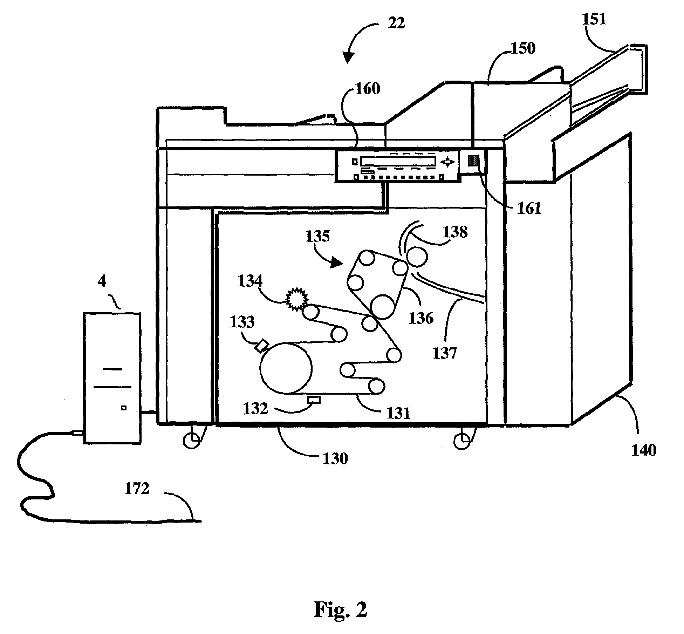

Fig. 2 shows a print server 4 for sending print jobs to a print engine 22 of which the various parts are illustrated diagrammatically. The print engine 22 can use any number of printing techniques. It can be a thermal inkjet printer, a pen plotter, or a press system based on organic photoconductor technology, for instance. Colour printing is achieved for example using an inkjet printer provided with four different basic inks, like cyan, magenta, yellow and black. The parts of the print engine 22 comprise a printer unit 130 for making prints of images on image supports in accordance with digital image data, a supply unit 140, a finishing and outputting section 150 for image supports and a user interface unit 160. The control unit 18 and the network connection unit 19 of the print server 4 shown in Fig. 3, are connected to different parts of the print engine 22.

The printer unit 130 comprises an electro-photographic processing stage known per se, in which a photo-conductive medium 131 in the form of a belt is charged by means of a corona unit 132 and then exposed by means of an LED array 133 in accordance with digital image data. The charge image thereby formed on the medium 131 is developed with toner powder in a developing unit 134, after which the toner image is transferred, in a combined transfer and fixing unit 135, to a heated rubber belt 136. The toner powder softens on this belt 136 as a result of the heat of the belt 136 and becomes tacky. It is then transferred and fixed on an image support, usually a sheet of paper, fed from a supply stage via a conveyor 137.

A supply of image supports, for example sheets of paper in different sizes and orientations is available in the supply unit 140.

The image supports with the toner image are transported via a conveyor 138 to the finishing and outputting section 150, which if necessary collates them into sets and staples them and then deposits them in the delivery tray 151.

The user interface panel of the unit 160 is provided with a display screen and keys. Unit 160 is connected to the control unit 18 and the network connection unit 19 of the print server 4. The unit 160 also includes a contact lock 161 for switching on and off the print engine and other input means such as buttons for selecting a user, setting queuing parameters etc.

The control unit 18 of the print server 4 being connected to the print engine 22 comprises a microprocessor 21 (shown in Fig. 3), a memory 20 like a hard disk and suitable hardware circuits and comprises modules for controlling the units 130, 140, 150 and 160. The control unit also comprises an image processing module for processing the digital image data so that prints of good image quality can be made by the printer unit 130.

The print server 4 connected to the print engine 22 also comprises a network connection unit 19 for connection to a local network N, which is diagrammatically shown in the form of a cable 172. The network connection unit receives print jobs from the client computers (the workstations), converts them in a format that can be processed by the print unit 130 and ensures in co-operation with the control unit 18 that the digital images are printed on image supports.

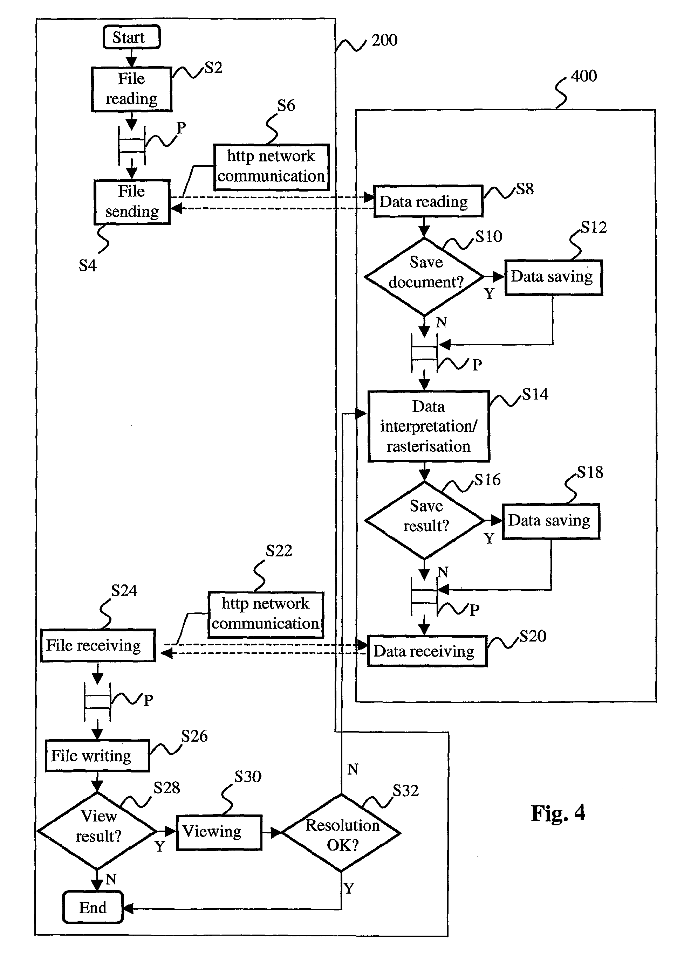

The method for viewing on a client document data representing at least a part of a document to be printed is now explained with reference to Fig. 4 which is a flow diagram showing an embodiment of the method according to the invention. Reference sign 200 indicates processes occurring at the computer client side, while reference sign 400 indicates processes occurring at the print server side.

The invention can be used for viewing any type of document to be printed, and is particularly useful for viewing wide format originals colour images with randomly distributed areas containing small details. Engineering drawings are a typical example of such originals. The documents to be printed can have formats such as HP-GU2, Calcomp, PostScript/PDF etc. The method according to the invention is particularly useful when vector-based graphics are to be viewed on the client computer before printing them. It is particularly useful to obtain a view of vector-based graphic object such as a line, since critical visual aspects such as line thickness and colours can be checked before actually printing. It is also very useful in order to obtain a view of outline fonts.

When a user wants to view on his monitor a document to be printed, like an engineering drawing having the format HP-GU2, he calls up a client application, for example by clicking an icon intended for the purpose in the application window of his monitor. The file corresponding to the document to be printed is read on the client side (step S2 in Fig. 4). The user may choose to make use of a viewing function before he decides whether the document is to be printed. The document to be viewed and/or to be printed is thus transferred (step S4) through a local network N to a print server 4 connected to a print engine 22 selected by the user. For sending the file, an http network communication (S6) may be used.

At the print server side 400, a process is dedicated to receive the data from the client computer as shown by step S8 in Fig. 4. The received print job can be scheduled by a control unit 18. For example, it can be placed in a queue. Optionally (S10), the data corresponding to the document to be printed may be saved (S12) in a memory like a hard disk 20 at the print server 4, which avoids sending the data again when the same document is to be printed or viewed. A process at the print server side is dedicated to transmit the document to be printed to the interpreter. Next, a raster conversion function (S14) performed by a processor 21 such as a Raster Image Processor (RIP) of the control unit 18 interprets the document to be viewed and/or to be printed. Thus a raster image file is obtained by a raster conversion function, which raster conversion function is the same as used for generating a raster image file being used for printing the document. Optionally (S16), the result of the interpretation may be saved (S18) on memory means 20 like a hard disk on the print server 4.

A process (S20) is dedicated to read the document data output by the raster conversion function. The document data is at least part of a raster image file like in a TIFF format. It is preferred that the raster conversion function at the print server performs the step of dividing the raster image file into areas. Areas can be any part of an image; it could be a tile or a band of an image, of any convenient area of an image. According to the invention, the same raster conversion function is used when the user decides to print the document.

Next the document data is sent to the client computer, using for example an http network communication (S22). The document data is received at by the client computer (S24) and written (S26) in a file that is stored on the memory means 10, for example. The user can decide whether he wants to obtain a view of the document to be printed (S28). If so, a viewing application at the client computer side is started (S30) to read the document data, which is for example a TIFF document and to display it on a display (monitor 14). The resolution of the document data generated for viewing purposes is for example 100 dots per inch (dpi). A relatively low resolution like 100 dpi is well suited for a rapid transfer of the document data (a TIFF raster image file for example) from the print server to the client computer. A view resolution of 100 dpi is thus an example of a trade-off between the quality of the view obtained on the display screen and the speed of transfer. However, it can happen that the user needs a higher resolution for zooming certain areas of the document. The user is asked if the resolution of the current view is satisfying (S32). If not, another raster image file is generated (S14) by the rasterisation function at the print server side, with a resolution well suited for zooming purposes and the raster image file is transferred to the client computer, repeating the above described steps.

References P in Fig. 4 indicate that processes are connected to each other through data buffers. Data buffers are memory streams in which one process can write data while another process can read data. Each data buffer has a limited amount of memory available. When a data buffer is full, the writing operation is put on hold. When a buffer is empty, the read operation is put on hold.

For a better efficiency, files can be sent block by block. In order to transfer each block, an http request is flushed, because this protocol needs to give the request size within its header. This property does not allow sending large files in a single http request because of memory consumption issues. Hence, it is preferred to send files block by block. For example, during the period that a block is sent (S4, S6) through the network from the client computer to the print server, another process taking place is reading (S2) of a next block. When a result block is received, it is transmitted to another process to write it in the result file, in order to request as fast as possible the next result block before the current block writing is done (S22, S24, S26).

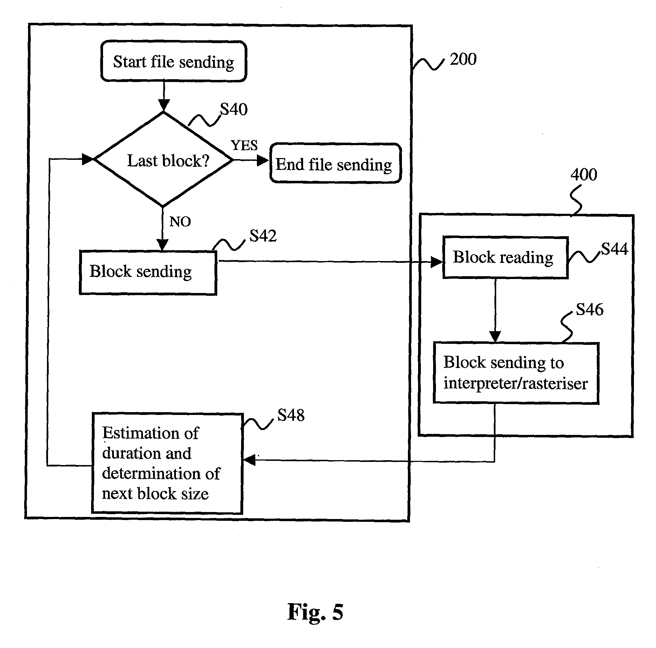

Fig. 5 shows a diagram explaining how a file is sent (S4, S6, S8) from the client computer (200) to the print server (400). With the required modifications, it could also apply to the steps S20, S22, S24. Thus the overall interpretation/rasterisation time can be optimised.

A Boolean operation (S40) determines whether the treated block is the last one of the file. If so, the process of file sending is over. If not, the block is sent (S42) to the print server where it is read (S44). Then the block is sent to the interpreter/rasteriser (S46). A process (S48) of the client computer estimates the overall duration between the moment that file sending has started and the moment that the raster image file is available on the client computer. The estimation is done by extrapolating the time the current block took to be sent to the interpreter/rasteriser to the total file size. By comparison with the previous result, the tendency allows to conclude whether the block size should be increased or decreased. This is done in order to increase the time efficiency of the process.

In order to obtain even faster processes and fast transfer of data, it is preferred to compress the raster image file obtained by the RIP for viewing purposes. A well suited format is for example compressed TIFF.

## Claims

1. Method for viewing on a client document data representing at least a part of a document to be printed, comprising the steps of:
- transferring the document to be printed from the client to a print server
- converting at the print server the document to be printed into document data
- transferring said document data from the print server to the client, **characterised in that** said document data are at least part of a raster image file obtained by a raster conversion function, said raster conversion function being used to print the document.

2. Method for viewing document data on a client according to claim 1, **characterised in that** the raster conversion function at the print server performs the step of dividing the raster image file into areas.

3. Method for viewing document data on a client according to claim 1 or 2, **characterised in that** the step of converting the document to be printed into document data is followed by the step of compressing the raster image file obtained by the raster conversion function.

4. Method for viewing document data on a client according to any of the preceding claims, **characterised in that** the flow of data is streamed during the steps of
- transferring the document to be printed from the client to a print server
- converting at the server the document to be printed into document data
- transferring said document data to the client

5. Method for viewing document data on a client according to claim 5, wherein the client is provided with a client data buffer and wherein the print server is provided with a server data buffer, **characterised in that** the size of the client data buffer and the size of the client data buffer are dynamically adjusted.

6. Method for viewing document data on a client according to any of the preceding claims, **characterised in that** the raster conversion function at the server generates a raster image file having a size optimised for the step of transferring the document data to the client

7. Method for viewing document data on a client according to any of the preceding claims, **characterised in that** the raster conversion function at the server generates on demand by the client a second raster image file having a size optimised for zooming purposes at the client.

8. Method for viewing document data on a client according to any of the preceding claims, **characterised in that** the document data is stored in a memory unit of the printer server.

9. Method for viewing document data on a client according to any of the preceding claims, **characterised in that** the document to be printed is stored in a memory unit of the printer server.

10. Apparatus comprising a print server for sending print jobs to at least one print engine and at least one client computer connected through a network to the print server, wherein the client is suited for transferring a document to be printed to the print server, which print server comprises a controller for converting the document to be printed into document data and which server is suited for transferring said document data to the client, **characterised in that** the controller comprises a raster conversion function generating for said document data a raster image file, said raster conversion function being used to print the document on the at least print engine.

11. Computer program product residing on a computer readable medium comprising instructions for causing at least one process unit to perform the method of any of the claims 1 to 9.
